(19) Europäisches Patentamt
European Patent Office
Office européen des brevets

(11) **EP 3 329 984 B1**

(12) **EUROPEAN PATENT SPECIFICATION**

(45) Date of publication and mention of the grant of the patent:
**18.08.2021 Bulletin 2021/33**

(51) Int Cl.:
*C11D 7/06* *(2006.01)*          *C11D 3/04* *(2006.01)*
*C11D 11/00* *(2006.01)*        *C02F 5/10* *(2006.01)*
*C11D 7/26* *(2006.01)*          *C11D 3/20* *(2006.01)*
*C02F 5/12* *(2006.01)*          *C02F 103/08* *(2006.01)*
*C02F 1/44* *(2006.01)*          *B01D 71/56* *(2006.01)*
*B01D 65/02* *(2006.01)*        *B01D 61/02* *(2006.01)*

(21) Application number: **16830100.0**

(22) Date of filing: **23.03.2016**

(86) International application number:
**PCT/JP2016/059150**

(87) International publication number:
**WO 2017/017995 (02.02.2017 Gazette 2017/05)**

(54) **CLEANING METHOD FOR A REVERSE OSMOSIS POLYAMIDE MEMBRANE**

REINIGUNGSVERFAHREN FÜR EINE UMKEHROSMOSE-POLYAMID-MEMBRAN

PROCÉDÉ DE NETTOYAGE D'UNE MEMBRANE EN POLYAMIDE PAR OSMOSE INVERSE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **27.07.2015 JP 2015147780**

(43) Date of publication of application:
**06.06.2018 Bulletin 2018/23**

(73) Proprietor: **Kurita Water Industries Ltd.**
**Nakano-ku, Tokyo 164-0001 (JP)**

(72) Inventors:
• **ISHII, Kazuki**
  **Tokyo 164-0001 (JP)**
• **KAWAKATSU, Takahiro**
  **Tokyo 164-0001 (JP)**

(74) Representative: **Hoffmann Eitle**
**Patent- und Rechtsanwälte PartmbB**
**Arabellastraße 30**
**81925 München (DE)**

(56) References cited:
| | |
|---|---|
| EP-A1- 1 652 571 | WO-A1-2008/120509 |
| WO-A1-2009/044449 | WO-A1-2009/044449 |
| CA-A1- 2 509 017 | JP-A- H02 152 550 |
| JP-A- H06 510 225 | JP-A- 2004 277 675 |
| JP-A- 2004 277 675 | JP-A- 2005 247 981 |
| JP-A- 2005 247 981 | JP-A- 2006 159 062 |
| JP-A- 2006 159 062 | JP-A- 2008 036 522 |
| JP-A- 2013 220 384 | JP-B2- 2 859 834 |
| US-A- 4 500 517 | US-A- 5 322 635 |
| US-A1- 2006 273 038 | US-A1- 2009 200 234 |
| US-B2- 7 367 346 | |

**Description**

Technical Field

The present invention relates to a method for cleaning an RO membrane with a cleaning liquid to recover performance thereof effectively, when an RO membrane particularly an aromatic polyamide RO membrane has been used in the field of water treatment such as desalination of seawater and has become fouled resulting in degradation of performance such as permeation flux, pressure difference, and salt rejection rate.

Background Art

Desalination of seawater and salt water with an RO membrane system and recovery of wastewater with an RO membrane system have been practiced in order to address the worldwide shortage of water supply. RO membranes included in RO membrane systems become fouled with various foulants, such as inorganic substances and organic substances. Since the fouling of an RO membrane results in the degradation of the properties of the RO membrane, such as salt rejection rate, pressure difference, and permeation flux, the development of a cleaning technique for effectively recovering the properties of a fouled RO membrane has been anticipated.

In particular, with a recent increase in the proportion of seawater desalination plants in which RO membranes are used, aromatic polyamide RO membranes are becoming widely used because of their high desalination property. Seawater desalination RO-membrane plants are often caused to malfunction by biofouling. Accordingly, the development of a cleaning technique for effectively recovering the properties of an RO membrane fouled with microorganisms or organic substances has been anticipated.

Since aromatic polyamide RO membranes have low resistance to chlorine, an aromatic polyamide RO membrane cannot be used in a treatment in which the RO membrane is brought into contact with chlorine under the operating conditions, unlike cellulose acetate RO membranes. Therefore, aromatic polyamide RO membranes are more likely to become fouled with microorganisms and organic substances than cellulose acetate RO membranes. On the other hand, aromatic polyamide RO membranes have higher resistance to alkali than cellulose acetate RO membranes and can be cleaned under alkaline conditions where the pH value is 10 or more.

Examples of known cleaning agents effective on membrane foulants, such as microorganisms and organic substances, which may be used for cleaning alkali-resistant aromatic polyamide RO membranes include the following (Non-patent Literature 1):

Alkaline agent (e.g., sodium hydroxide)
Surfactant (e.g., sodium lauryl sulfate)
Chelating agent (e.g., EDTA)

It may not be possible to sufficiently clean a heavily fouled RO membrane with the above chemicals.

While sodium hypochlorite is a chemical highly effective on microorganisms and organic substances, sodium hypochlorite has not been used for cleaning aromatic polyamide RO membranes because aromatic polyamide RO membranes have low resistance to chlorine. In a known technique that can be used when a chlorine microbiocide is used, free chlorine is reduced with a reductant before the chlorine microbiocide is fed to an RO membrane (Patent Literature 1).

Patent Literature 2 discloses that a membrane module is cleaned with an acid and subsequently with an oxidizing agent. Since the salt rejection rate of the membrane described in Patent Literature 2 is 95%, the membrane is considered to be a cellulose acetate RO membrane. In Patent Literature 2, it is not mentioned that the technique is applied to an RO membrane having a reduced permeation flux or the technique is implemented under alkaline conditions.

An agent for cleaning a semipermeable membrane which is described in Patent Literature 3 includes gluconic acid as cleaning components. In Patent Literature 3, it is described that gluconic acid is used as an organic acid on an acidic side and serves as a pH-buffering agent. In Patent Literature 3, EDTA is further used as a chelating agent, that is, gluconic acid is used for a purpose different from that in the present invention.

In Patent Literature 4, gluconic acid is included in examples of a chelating agent used as a component of an agent for cleaning a permselective membrane. In Patent Literature 4, gluconic acid is put in the same category with oxalic acid, citric acid, EDTA, and the like. Furthermore, there is no description of examples where gluconic acid is used nor description of the concentration of gluconic acid.

One of the techniques in which gluconic acid is used as an agent for inhibiting scaling of RO membranes is a method for inhibiting formation of scale disclosed in Patent Literature 5. In this method, an organic phosphonate and gluconic acid are added to water that is to be treated, the water is passed through an RO membrane, and subsequently water that is to be treated having a pH of 9 or more is passed through the RO membrane. In Patent Literature 5, it is described that the above method enables the removal of scale particles adhered on an RO membrane and that setting the pH value to 10 or more enables slime control. However, the above chemicals are added to the water at a low concentration of about 1 to 10 mg/L since the addition of the chemicals is done during operation. In Patent Literature 5, the use of gluconic acid as a cleaning agent for recovering the properties of an RO membrane, such as permeation flux, which have become degraded with use is not suggested.

Patent Literature 6 discloses a method in which a chelating agent is added to water that is to be treated having a pH of 7 or more in order to prevent an RO membrane from being obstructed by scale. In Patent Literature 6, it is described that gluconic acid is an example of the chelating agent. In this method, since the addition of the chemical is done during operation as in Patent Literature 5, the chemical is used at a low concentration of about 10 mg/L. Furthermore, the use of gluconic acid as a cleaning agent for recovering the properties of an RO membrane, such as permeation flux, which have become degraded with use is not suggested. In Patent Literature 6, while gluconic acid is put in the same category with EDTA, there is no description of examples where gluconic acid is used. As discussed in Comparative examples below, EDTA does not have a cleaning effect unlike gluconic acid.

Patent Literature 1: JP H9-57067 A

Patent Literature 2: JP H01-307407 A

Patent Literature 3: Japanese Patent No. 2859834

Patent Literature 4: Japanese Patent No. 4691970

Patent Literature 5: JP 2013-119071 A

Patent Literature 6: JP 2013-220384 A

Non-patent Literature 1: "Measures against Deterioration and Membrane Fouling" (published by NTS), p. 142, 2008

US 5,322,635 describes a method for the removal of water scale deposits by using a hydroxy carboxylic acid with an alkanol amine in the presence of water which leads to a one to one aqueous neutral soap reaction product. The hydroxy carboxylic acid may be selected ia from gluconic acid.

JP 2006-159062 describes a washing method for a permselective membrane by using a detergent containing a polyol having a molecular weight of 400 or less and an acid or alkali.

EP 1 652 571 refers to a back-wash process for cleaning a filtration membrane by using an aqueous solution comprising one or more water-soluble peracids derived from a carboxylic acid comprising 2 or more carboxylic acid moieties.

US 7,367,346 relates to an apparatus for cleaning a hemodialyzer. The cleaning solution may comprise sodium gluconate, a chelating or sequestering agent effective at an alkaline pH, hydrogen peroxide and sodium hydroxide to bring the pH to 11.3 (Example 6).

Finally, US 2009/0200234 describes methods for cleaning surfaces which are sensitive to high temperatures and/or which have high pH limitations. An acidic active oxygen use solution and an alkaline override solution are used which comprise an activator complex and a source of alkalinity. This alkaline override solution may also contain a surfactant, a builder which may be selected from sodium gluconate, and/or a buffer.

Summary of Invention

An object of the present invention is to provide a method for cleaning a polyamide RO membrane with a cleaning liquid to remove effectively foulants that can not be sufficiently removed with conventional cleaning agents when an RO membrane used for water treatment, particularly an aromatic polyamide RO membrane used for desalination of seawater, has become fouled resulting in degradation of performance such as permeation flux, pressure difference, and salt rejection rate.

The inventors of the present invention studied the types of fouling of RO membranes used for desalination of seawater and confirmed that, in the field of seawater desalination, RO membranes become, for example, biofouled with organic substances and also become fouled with heavy metals, such as Ca, Mg, and Fe, in a combined manner.

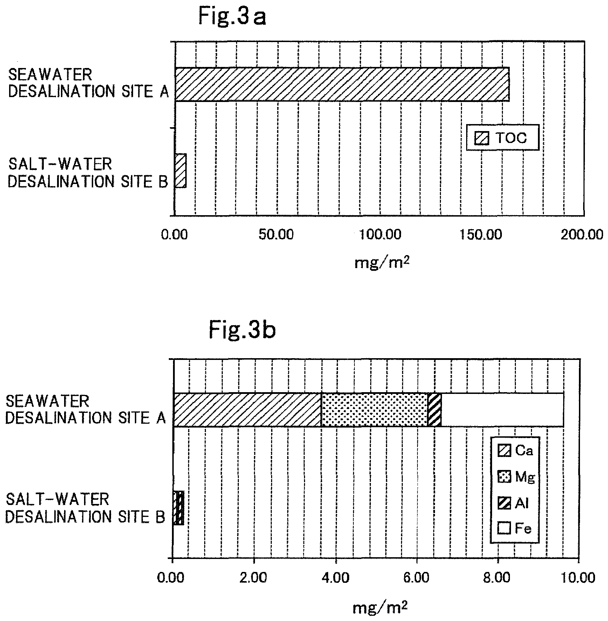

Figs. 3a and 3b illustrate the amounts of TOC, Ca, Mg, Al, and Fe, per unit area, adhered on each of fouled RO membranes that had been used in an actual seawater desalination RO facility and an actual salt-water desalination RO facility. The amounts of foulants were determined by dismantling fouled membranes taken from the respective RO facilities and performing extraction using the resulting samples containing the foulants in a sodium hydroxide solution having a pH of 12. The results illustrated in Figs. 3a and 3b confirm that not only fouling resulting from organic substances but also fouling resulting from inorganic substances are more significant in the seawater desalination system site A than in the salt-water desalination system site B. It is considered that fouling resulting from inorganic substances is more significant in a seawater desalination RO facility than in a salt-water desalination RO facility primarily because the raw water, that is, seawater, contains a large amount of inorganic components. It is also considered that the inorganic substances may also result from a coagulant used in the pretreatment.

The inventors of the present invention conducted extensive studies of a cleaning agent effective on such a type of fouling and, as a result, found that performing cleaning by using a chelating agent that is an aldonic acid, such as gluconic acid, at a predetermined concentration enables a markedly large cleaning effect.

The subject-matter of the present invention is as defined in the claims.

Advantageous Effects of Invention

According to the present invention, it is possible to efficiently remove foulants that can not be sufficiently removed with cleaning agents known in the related art from a polyamide RO membrane particularly, an aromatic polyamide RO membrane when the RO membrane has been used for water treatment and has become fouled resulting in degradation of performance such as permeation flux, pressure difference, and salt rejection rate. According to the present invention, it is possible to effectively clean a polyamide RO membrane used for desalination of seawater which has become fouled with organic substances and inorganic substances in a combined manner whereby recovering the properties of the RO membrane. Brief Description of Drawings

Fig. 1 is a schematic diagram illustrating a flat-membrane testing apparatus used in Examples.
Fig. 2 is a cross-sectional view of a closed container included in the flat-membrane testing apparatus illustrated in Fig. 1, illustrating the structure of the closed container.
Figs. 3a and 3b are graphs illustrating the results of analysis of the types of fouling of RO membranes used in a seawater desalination system site A and a salt-water desalination system site B. Fig. 3a illustrates the amount of TOC adhered on the surface of each of the membranes. Fig. 3b illustrates the amounts of Ca, Mg, Al, and Fe adhered on the surface of each of the membranes.

Description of Embodiments

An embodiment of the present invention is described below in detail.

[Mechanism of Action]

The mechanism of the action according to the present invention is not clear in detail but presumably as follows.

While the detachment and hydrolysis effects are achieved by performing cleaning under alkaline conditions, chelation of heavy metals is caused by an aldonic acid and/or a salt of an aldonic acid (hereinafter, may be referred to as "aldonic acid (salt)"). When an anionic surfactant is used in combination with the aldonic acid (salt), the anionic surfactant makes the foulants hydrophilic and causes the detachment of the foulants. When a polyol having a molecular weight of 1000 or less is used in combination with the aldonic acid and/or the salt thereof, the polyol causes replacement and detachment of the foulants. The above components synergistically increase the alkali cleaning effect.

[RO Membrane]

The RO membrane that is to be cleaned in the present invention is a polyamide RO membrane, such as an aromatic polyamide RO membrane. The present invention is particularly effective on an RC membrane used for desalination of seawater which has become fouled with organic substances and inorganic substances in a combined manner, which can not be sufficiently cleaned with cleaning agents known in the related art.

[Agent for Cleaning RO Membrane]

The agent for cleaning an RO membrane used according to the present invention includes an aldonic acid (salt). The agent for cleaning an RO membrane according to the present invention is commonly prepared by dissolving the aldonic acid (salt) and optional components, such as an alkaline agent and other chemicals, in water.

The term "cleaning agent" used herein refers to an agent that is prepared for the distribution and storage of the products and contains the aldonic acid (salt) and the other chemicals at concentrations higher than those required when the chemicals are used for cleaning an RO membrane. The term "cleaning liquid" used herein refers to a liquid prepared by diluting the cleaning agent with water to the concentrations at which the chemicals are used for cleaning an RO membrane.

<Aldonic Acid (Salt)>

The term "aldonic acid" is a general term for hydroxy monocarboxylic acids obtained by oxidation of only an aldehyde group of an aldose. The aldonic acid is selected from gluconic acid, glucoheptonic acid, . Examples of an aldonic acid salt include alkali metal salts of the above aldonic acids, such as a sodium salt and a potassium salt of the above aldonic acids.

The aldonic acid (salt) used in the present invention is gluconic acid, an alkali metal salt of gluconic acid, glucoheptonic acid, or an alkali metal salt of glucoheptonic acid in consideration of ease of availability and safety.

The above aldonic acids (salts) may be used alone or in a mixture of two or more.

<Other Components>

The agent for cleaning an RO membrane may include, in addition to the aldonic acid (salt), an alkaline agent, a detergent, and a solvent other than water that are necessary for cleaning an RO membrane.

Examples of the alkaline agent included in the agent for cleaning an RO membrane according to the present invention include hydroxides of alkali metals, such as sodium hydroxide and potassium hydroxide.

Other cleaning components that are used in combination with the aldonic acid (salt) are an anionic surfactant and a polyol having a molecular weight of 1000 or less. Using an anionic surfactant in combination with the aldonic acid (salt) promotes the detachment of foulants adhered on the surface of the membrane and thereby further increases the cleaning effect. Using a polyol having a molecular weight of 1000 or less in combination with the aldonic acid (salt) enhances the wettability of the cleaning component and thereby further increases the cleaning effect.

Examples of the anionic surfactant include alkylbenzenesulfonates, such as sodium dodecylbenzenesulfonate, and alkyl sulfates, such as sodium dodecyl sulfate.

A polyol is a compound having a plurality of OH groups. Examples of polyols include alkylene glycols, such as ethylene glycol, propylene glycol, and trimethylene glycol; glycerin; polyglycols, such as diethylene glycol and other polyalkylene glycols; and sugar alcohols, such as erythritol and mannitol. Among the above polyols, alkylene glycols, such as ethylene glycol, propylene glycol, and trimethylene glycol, are preferable in terms of ease of availability and economy. A polyol having a high molecular weight exceeding 1000 may act as a substance that causes fouling of the membrane. Accordingly, the molecular weight of the polyol used in the present invention is 1000 or less and is preferably 400 or less.

The cleaning agent may further include a solvent. Examples of the solvent include alcohols, such as ethanol; amines, such as monoethanolamine, diethanolamine, and triethanolamine; ketones, such as acetone; and ethers, such as dimethyl ether, diethyl ether, and diethylene glycol monomethyl ether.

The above solvents may be used alone or in combination with two or more.

The agent for cleaning an RO membrane according to the present invention may be a one-part cleaning agent prepared by mixing the aldonic acid (salt) with the alkaline agent, the other detergents. The cleaning agent may also be a two-part cleaning agent, that is, some of the above components may be separately provided in the form of a second part of the agent. Alternatively, the cleaning agent may be constituted by three or more parts.

The liquid for cleaning an RO membrane, which is prepared by diluting the agent for cleaning an RO membrane according to the present invention with water, may also be constituted by one part, two parts, or three or more parts. In the case where the cleaning liquid is constituted by two parts or three or more parts, for example, an RO membrane is cleaned with a cleaning liquid including the aldonic acid (salt) and subsequently with another cleaning liquid including the other detergents.

The concentration of each chemical in the agent for cleaning an RO membrane is adjusted to be about 5 to 100 times by weight the concentration of the chemical in the liquid for cleaning an RO membrane according to the present invention, which is described below, so that the preferable concentration of the chemical in the liquid for cleaning an RO membrane is achieved when the cleaning agent is diluted with water, which is preferably pure water, about 5 to 100 times by weight.

The agent for cleaning an RO membrane according to the present invention may be prepared in the form of an aqueous solution. Alternatively, the entirety or a part of the cleaning agent may be prepared in the form of a powder or a solid.

[Cleaning Liquid]

The liquid for cleaning an RO membrane used according to the present invention is an aqueous solution prepared by diluting the agent for cleaning an RO membrane with water. The liquid for cleaning an RO membrane may also be prepared by diluting the agent for cleaning an RO membrane with water and adding the alkaline agent, optionally adding the detergents, the solvents, to the diluted cleaning agent at the predetermined concentrations.

The liquid for cleaning an RO membrane is not necessarily prepared from the agent for cleaning an RO membrane and may be directly prepared such that the predetermined chemical concentrations are achieved.

The preferable concentration of the aldonic acid (salt) in the liquid for cleaning an RO membrane varies with the type of the aldonic acid (salt) used, the pH of the cleaning liquid, the presence of the other detergents used in combination with the aldonic acid (salt), the types and concentrations of the other detergents. The concentration of the aldonic acid (salt) in the cleaning liquid is 0.3%

by weight or more. If the concentration of the aldonic acid (salt) is lower than the above lower limit, it is not possible to sufficiently clean an RO membrane by using the aldonic acid (salt). On the other hand, setting the concentration of the aldonic acid (salt) to be excessively high does not increase the above advantageous effects in accordance with the concentration of the aldonic acid (salt) and just disadvantageously increases the TOC concentration in the cleaning liquid that is to be disposed of. Accordingly, the concentration of the aldonic acid (salt) in the liquid for cleaning an RO membrane is 2% by weight or less.

The pH of the liquid for cleaning an RO membrane used according to the present invention is preferably 8 or more and is particularly 10 to 14 in consideration of

the cleaning effect.

If the pH of the cleaning liquid is less than 8, the permeability of the membrane may fail to be sufficiently recovered by cleaning. The higher the pH of the cleaning liquid, the larger the cleaning effect. However, setting the pH of the cleaning liquid to be excessively high reduces ease of handling of the cleaning liquid and increases the risk of the degradation of the RO membrane. The pH of the cleaning liquid is 14 or less and is

preferably 11 or more and 13 or less.

The pH of the liquid for cleaning an RO membrane used according to the present invention is adjusted to be the above preferable pH value by the addition of the alkaline agent.

The concentration of the anionic surfactant in the liquid for cleaning an RO membrane according to the present invention is 100 to

10000 mg/L and is preferably 300 to 5000 mg/L.

If the concentration of the anionic surfactant is excessively low, a sufficient dispersion effect of the anionic surfactant may fail to be achieved. In addition, the cleaning effect may fail to be sufficiently enhanced by using the anionic surfactant. If the concentration of the anionic surfactant is excessively high, the degree of association of anionic surfactant molecules is increased. This may reduce the cleaning effect.

The concentration of the polyol having a molecular weight of 1000 or less in the liquid for cleaning an RO membrane used according to the present invention is 0.1% to 10% by weight and is preferably 0.5% to 5% by weight. If the concentration of the polyol having a molecular weight of 1000 or less is excessively low, the replacement and detachment effects of the cleaning component may fail to be sufficiently enhanced by using the polyol. Setting the concentration of the polyol having a molecular weight of 1000 or less to be excessively high disadvantageously increases the TOC concentration in the cleaning liquid that is to be disposed of.

<Method for Producing Agent and Liquid for Cleaning RO Membrane>

The agent for cleaning an RO membrane used according to the present invention is prepared by mixing the aldonic acid (salt), the anionic surfactant and the polyol, the alkaline agent, and the other optional cleaning components with water. The entirety or a part of the agent for cleaning an RO membrane may be prepared in the form of a powder or a solid.

The liquid for cleaning an RO membrane is produced by diluting the agent for cleaning an RO membrane, which is produced by the above-described method, with water, which is preferably pure water, and optionally adding the alkaline agent, the detergents, the other solvents,

to the diluted cleaning agent. The liquid for cleaning an RO membrane is not necessarily produced from the agent for cleaning an RO membrane and may be directly produced by the above-described method.

<Cleaning Method>

For cleaning an RO membrane with the liquid for cleaning an RO membrane according to the present invention, any method in which the cleaning liquid is brought into contact with the RO membrane may be employed. One of the common methods is immersion cleaning, in which the cleaning liquid is introduced into a raw-water-side portion of an RO-membrane module and the RO-membrane module is subsequently left to stand. Optionally, circulation cleaning, in which the cleaning liquid is used in a circulatory manner, may be performed prior or subsequent to the immersion cleaning.

In the case where the agent and the liquid for cleaning an RO membrane according to the present invention are constituted by two parts or three or more parts, the parts may be mixed together before used for cleaning. Alternatively, the parts may be each separately used and cleaning may be performed in multiple stages with the respective parts. For example, after cleaning has been performed with a cleaning liquid including the aldonic acid (salt), another cleaning is performed with a cleaning liquid including the other chemicals.

The immersion cleaning described above or a combination of the immersion cleaning and the circulation cleaning described above is commonly used even in the case where another cleaning, such as cleaning using an aqueous alkaline solution or an aqueous acidic solution, is performed prior or subsequent to the cleaning using the liquid for cleaning an RO membrane according to the present invention.

An example of cleaning using a cleaning liquid other than the liquid for cleaning an RO membrane according to the present invention is cleaning using an aqueous alkaline solution that does not contain the aldonic acid (salt) subsequent to the cleaning using the liquid for cleaning an RO membrane as defined in the present invention. Examples of an alkaline agent included in the aqueous alkaline solution are the same as the above-described examples of the alkaline agent included in the liquid for cleaning an RO membrane according to the present invention. The pH of the aqueous alkaline solution is preferably 10 or more and is particularly preferably 11 to 13 in consideration of the cleaning effect and ease of handling.

Another example of cleaning using a cleaning liquid other than the liquid for cleaning an RO membrane according to the present invention is cleaning using an aqueous acidic solution, which is effective for the removal of scale and metal colloid particles. For performing cleaning using an aqueous acidic solution, an aqueous solution that includes one or more acids selected from hydrochloric acid, nitric acid, citric acid, oxalic acid, may be used.

The pH of the aqueous acidic solution is preferably 4 or less and is particularly preferably 1 to 3 in consideration of the cleaning effect and ease of handling.

The amount of time during which immersion cleaning using the liquid for cleaning an RO membrane used according to the present invention or the other cleaning liquid is performed is not limited and may be set such that the properties of the membrane are recovered at desired recovery rate. The immersion cleaning is commonly performed for about 2 to 24 hours. In the case where the circulation cleaning is performed prior or subsequent to the immersion cleaning, the amount of time during which the circulation cleaning is performed is not limited and may be set such that the properties of the membrane are recovered at desired recovery rate. The circulation cleaning is commonly performed for about 0.5 to 3 hours.

In the case where the cleaning using the liquid for cleaning an RO membrane used according to the present invention and the cleaning using the aqueous alkaline solution and/or the aqueous acidic solution are performed in a combined manner, the order in which the two cleanings are conducted is not limited. Performing cleaning using the aqueous acidic solution prior or subsequent to the cleaning using the liquid for cleaning an RO membrane according to the present invention enables removal of scale and advantageously increases the cleaning effect.

Subsequent to the cleaning using the above cleaning liquids, commonly, high-purity water, such as pure water, is passed through the membrane in order to perform finishcleaning. Subsequently, the operation of the RO membrane system is restarted.

EXAMPLES

The present invention is described below further specifically with reference to Examples, Reference Examples and Comparative examples.

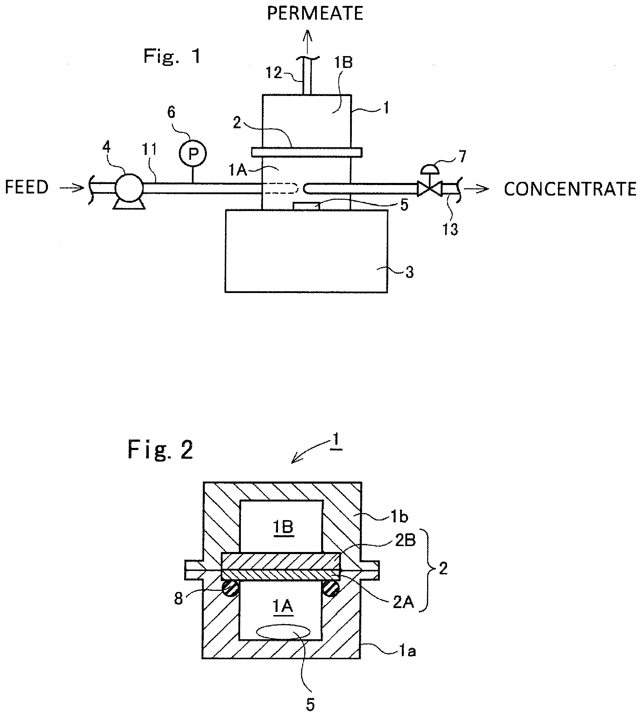

In Examples and Comparative examples below, the RO-membrane cleaning effect was determined using the flat-membrane testing apparatus illustrated in Figs. 1 and 2.

In the flat-membrane testing apparatus, RO-membrane feed is fed to a raw-water chamber 1A included in a closed container 1 with a high-pressure pump 4 through a pipe 11. The raw-water chamber 1A is located below a flat-membrane cell 2 including an RO membrane. As illustrated in Fig. 2, the closed container 1 is constituted by a lower casing 1a and an upper casing 1b, which are located on the raw-water-chamber-IA side and the permeate-chamber-1B side, respectively. The flat-membrane cell 2 is fixed in position by being interposed between the lower casing 1a and the upper casing 1b with an O-ring 8. The flat-membrane cell 2 is constituted by an RO membrane 2A and a porous supporting plate 2B that supports the permeate-side surface of the RO membrane 2A. The inside of the raw-water chamber 1A, which is located below the flat-membrane cell 2, is stirred by a stirrer 3 rotating a stirring bar 5. The permeate of the RO membrane is passed into a permeate chamber 1B located above the flat-membrane cell 2 and subsequently drawn through a pipe 12. The concentrate is drawn through a pipe 13. The pressure inside the closed container 1 is adjusted with a pressure gage 6 disposed in the feed pipe 11 and a pressure control valve 7 disposed in the concentrate-drawing pipe 13.

Cleaning tests were all conducted at 25°C.

The permeation flux and salt rejection rate of the RO membrane were calculated using the following formulae.

$$\text{Permeation Flux } [m^3/(m^2 \cdot day)] = \text{Flow Rate of Permeate}$$

$$[m^3/day] / \text{Area of Membrane } [m^2] \times \text{Temperature Conversion}$$

$$\text{Coefficient } [-]$$

$$\text{Salt Rejection Rate } [\%] = (1 - \text{Electric Conductivity of}$$

$$\text{Permeate } [mS/m] / \text{Electric Conductivity of Concentrate}$$

$$[mS/m]) \times 100$$

[Examples 1 to 4 and Comparative Examples 1 to 4]

The cleaning tests described below were conducted using the following cleaning liquids.

<Cleaning Liquids>

Reference Example 1: Aqueous sodium hydroxide solution containing 0.1-weight% sodium gluconate and having a pH of 12
Reference Example 2:Aqueous sodium hydroxide solution containing 0.5-weight% sodium gluconate and having a pH of 12
Reference Example 3: Aqueous sodium hydroxide solution containing 0.3-weight% sodium gluconate and having a pH of 12

Example 4: Aqueous sodium hydroxide solution containing 0.5-weight% sodium gluconate, 1500-mg/L sodium dodecyl sulfate, and 2-weight% propylene glycol and having a pH of 12

Comparative example 1: Aqueous sodium hydroxide solution having a pH of 12
Comparative example 2: Aqueous sodium hydroxide solution containing 0.5-weight% EDTA (ethylenediaminetetraacetic acid) and having a pH of 12
Comparative example 3: Aqueous sodium hydroxide solution containing 0.5-weight% hexametaphosphoric acid and having a pH of 12
Comparative example 4: Aqueous sodium hydroxide solution containing 0.5-weight% EDTA, 1500-mg/L sodium dodecyl sulfate, and 2-weight% propylene glycol and having a pH of 12

<Test Method>

An aromatic polyamide RO membrane "TM-820A" (fresh membrane, permeation flux: 0.6 $[m^3/(m^2 \cdot day)]$) produced by Toray Industries, Inc. was attached to an RO apparatus included in a seawater desalination RO system. The RO system was subsequently operated for three years. After the operation of the RO system had been terminated, the membrane was removed from the RO apparatus and dismantled to prepare a flat membrane sample of a fouled membrane. The flat membrane sample was cut into a circular shape and placed on the flat-membrane testing apparatus illustrated in Figs. 1 and 2 to which a membrane having the same size as the flat membrane sample can be attached. Subsequently, a test was conducted in the following manner.

(1) Pure water was passed, at 1.55 MPa, through the fouled membrane that had not yet been cleaned in order to measure the pure-water permeation flux of the fouled membrane before cleaning. Subsequently, a 2000-mg/L aqueous sodium chloride solution was passed through the fouled membrane under the same conditions as above in order to measure the salt rejection rate of the membrane.

(2) A specific one of the above cleaning liquids was fed to the membrane in order to clean the membrane. For each case, the cleaning was performed in the order of 2-hour circulation cleaning, 15-hour immersion cleaning, and 2-hour circulation cleaning. The operating pressure during the circulation cleaning was set to 0.2 MPa.

(3) The pure-water permeation flux and salt rejection rate of the cleaned membrane were measured as in (1) above.

(4) The recovery rate was calculated using the following formula.

$$\text{Recovery Rate [-] = (Permeation Flux of Cleaned Membrane) / (Permeation Flux of Fresh Membrane)}$$

Table 1 shows the results. In Table 1, "GANa" refers to sodium gluconate, "SDS" refers to sodium dodecyl sulfate, and "PG" refers to propylene glycol.

[Table 1]

| | | Cleaning liquid | | Permeation flux [$m^3/(m^2 \cdot day)$] | | Recovery rate [-] |
| --- | --- | --- | --- | --- | --- | --- |
| | pH | Cleaning component | | Before cleaning | After cleaning | |
| Example 1* | 12 | 0.1%GANa+NaOH | | 0.28 | 0.42 | 0.70 |
| Example 2* | 12 | 0.5%GANa+NaOH | | 0.30 | 0.47 | 0.78 |
| Example 3* | 12 | 0.3%GANa+NaOH | | 0.27 | 0.47 | 0.78 |
| Example 4 | 12 | 0.3%GANa+NaOH +SDS+PG | | 0.29 | 0.49 | 0.82 |
| Comparative example 1 | 12 | NaOH | | 0.29 | 0.41 | 0.68 |
| Comparative example 2 | 12 | 0.5%EDTA+NaOH | | 0.27 | 0.40 | 0.67 |
| Comparative example 3 | 12 | 0.5%Hexametaphosphoric acid +NaOH | | 0.27 | 0.42 | 0.70 |
| Comparative example 4 | 12 | 0.5%EDTA+NaOH +SDS+PG | | 0.33 | 0.43 | 0.72 |
| *Reference | | | | | | |

As is clear from the results shown in Table 1, sodium gluconate exhibited a cleaning effect comparable to the cleaning effects of the other chelating agents even when used at a low concentration. A cleaning liquid including sodium gluconate at a concentration of 0.3% by weight or more had a markedly higher cleaning effect than the other chelating agents.

The results obtained in Example 4 confirm that using sodium gluconate in combination with an anionic surfactant and a polyol having a molecular weight of 1000 or less promoted detachment of foulants and markedly increased the permeation flux ratio.

In all of Examples 1 to 4 and Comparative examples 1 to 4, the salt rejection rate of the cleaned RO membrane was substantially equal to that of the RO membrane before cleaning, that is, about 98% to 99%.

The present application is based on Japanese Patent Application No. 2015-147780 filed on July 27, 2015.

Reference Signs List

1    CONTAINER
2    FLAT-MEMBRANE CELL
2A    RO MEMBRANE
2B    POROUS SUPPORTING PLATE

3    STIRRER
4    HIGH-PRESSURE PUMP
5    STIR BAR
6    PRESSURE GAGE
7    PRESSURE CONTROL VALVE
8    O-RING

## Claims

1. A method for cleaning a reverse osmosis polyamide membrane for water treatment, fouled with organic substances and inorganic substances in a combined manner, comprising:

   bringing a cleaning liquid for cleaning a reverse osmosis polyamide membrane into contact with the membrane, the liquid comprising an aldonic acid and/or a salt thereof selected from gluconic acid, glucoheptonic acid, an alkali metal salt of gluconic acid, and an alkali metal salt of glucoheptonic acid,
   wherein a pH of the liquid is 10 to 14,
   the agent further comprising an anionic surfactant and a polyol having a molecular weight of 1000 or less,
   wherein the concentration of the aldonic acid and/or the salt thereof is 0.3% by weight or more and 2% by weight or less,
   the concentration of the anionic surfactant is 100 to 100000 mg/l and
   the concentration of the polyol compound having a molecular weight of 1000 or less is 0.1 to 10% by weight, each based on the cleaning liquid,
   wherein the liquid is an aqueous liquid.

2. The method for cleaning a reverse osmosis polyamide membrane according to Claim 1, wherein the reverse osmosis membrane is an aromatic polyamide reverse osmosis membrane.

3. The method for cleaning a reverse osmosis polyamide membrane according to claim 1 or 2, wherein the reverse osmosis membrane is a reverse osmosis membrane that has been used for desalination of seawater.

## Patentansprüche

1. Verfahren zum Reinigen einer Umkehrosmose-Polyamidmembran für die Wasserbehandlung, die mit organischen Substanzen und anorganischen Substanzen auf kombinierte Weise angefault ist, enthaltend:

   Kontaktieren einer Reinigungsflüssigkeit zum Reinigen einer Umkehrosmose-Polyamidmembran mit der Membran,
   wobei die Flüssigkeit eine Aldonsäure und/oder ein Salz davon enthält, ausgewählt aus Gluconsäure, Glucoheptonsäure, einem Alkalimetallsalz von Gluconsäure und einem Alkalimetallsalz von Glucoheptonsäure,
   worin der pH der Flüssigkeit 10 bis 14 ist,
   wobei das Mittel weiterhin ein anionisches Tensid und ein Polyol mit einem Molekulargewicht von 1.000 oder weniger enthält,
   worin die Konzentration der Aldonsäure und/oder des Salzes davon 0,3 Gew.-% oder mehr und 2 Gew.-% oder weniger ist,
   die Konzentration des anionisches Tensides 100 bis 100.000 mg/1 ist und
   die Konzentration der Polyolverbindung mit einem Molekulargewicht von 1.000 oder weniger 0,1 bis 10 Gew.-% ist, jeweils bezogen auf die Reinigungsflüssigkeit,
   worin die Flüssigkeit eine wässrige Flüssigkeit ist.

2. Verfahren zum Reinigen einer Umkehrosmose-Polyamidmembran gemäß Anspruch 1, worin die Umkehrosmosemembran eine aromatische Polyamid-Umkehrosmosemembran ist.

3. Verfahren zum Reinigen einer Umkehrosmose-Polyamidmembran gemäß Anspruch 1 oder 2, worin die Umkehrosmosemembran eine Umkehrosmosemembran ist, die zum Entsalzen von Meerwasser verwendet wurde.

**Revendications**

1. Procédé de nettoyage d'une membrane en polyamide d'osmose inverse pour un traitement d'eau, encrassée avec des substances organiques et des substances inorganiques d'une manière combinée, comprenant :

   une mise en contact d'un liquide de nettoyage pour nettoyer une membrane en polyamide d'osmose inverse avec la membrane,
   le liquide comprenant un acide aldonique et/ou un sel de celui-ci sélectionné parmi l'acide gluconique, l'acide glucoheptonique, un sel de métal alcalin d'acide gluconique, et un sel de métal alcalin d'acide glucoheptonique, dans lequel un pH du liquide est de 10 à 14,
   l'agent comprenant en outre un tensioactif anionique et un polyol présentant un poids moléculaire de 1000 ou moins,
   dans lequel la concentration de l'acide aldonique et/ou du sel de celui-ci est de 0,3 % en poids ou plus et 2 % en poids ou moins,
   la concentration du tensioactif anionique est de 100 à 100 000 mg/l et
   la concentration du composé de polyol présentant un poids moléculaire de 1000 ou moins est de 0,1 à 10 % en poids, chacune sur la base du liquide de nettoyage,
   dans lequel le liquide est un liquide aqueux.

2. Procédé de nettoyage d'une membrane en polyamide d'osmose inverse selon la revendication 1, dans lequel la membrane d'osmose inverse est une membrane d'osmose inverse en polyamide aromatique.

3. Procédé de nettoyage d'une membrane en polyamide d'osmose inverse selon la revendication 1 ou 2, dans lequel la membrane d'osmose inverse est une membrane d'osmose inverse qui a été utilisée pour dessaler de l'eau de mer.

PERMEATE

Fig. 1

FEED →

CONCENTRATE

Fig. 2

# Fig.3a

# Fig.3b

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP H957067 A
- JP H01307407 A
- JP 2859834 B
- JP 4691970 B
- JP 2013119071 A
- JP 2013220384 A
- US 5322635 A
- JP 2006159062 A
- EP 1652571 A
- US 7367346 B
- US 20090200234 A
- JP 2015147780 A

### Non-patent literature cited in the description

- Measures against Deterioration and Membrane Fouling. NTS, 2008, vol. 142